(19)

Europäisches
Patentamt
European
Patent Office
Office européen
des brevets

(11)  **EP 4 350 012 A1**

(12)  **EUROPEAN PATENT APPLICATION**
published in accordance with Art. 153(4) EPC

(43) Date of publication:
**10.04.2024  Bulletin 2024/15**

(21) Application number: **22828263.8**

(22) Date of filing: **14.06.2022**

(51) International Patent Classification (IPC):
**C21C 7/06** (2006.01)  **C21C 7/10** (2006.01)

(52) Cooperative Patent Classification (CPC):
**C21C 7/06; C21C 7/10;** Y02P 10/20

(86) International application number:
**PCT/JP2022/023737**

(87) International publication number:
**WO 2022/270346 (29.12.2022 Gazette 2022/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **22.06.2021   JP 2021103010**

(71) Applicant: **JFE Steel Corporation
Tokyo 100-0011 (JP)**

(72) Inventors:
• **NEGISHI, Hidemitsu
Tokyo 100-0011 (JP)**
• **MURAI, Takeshi
Tokyo 100-0011 (JP)**
• **MIZOBATA, Keisuke
Tokyo 100-0011 (JP)**

(74) Representative: **Grünecker Patent- und
Rechtsanwälte
PartG mbB
Leopoldstraße 4
80802 München (DE)**

(54)  **MOLTEN STEEL PROCESSING METHOD AND STEEL PRODUCTION METHOD**

(57)  Proposed is a treatment method of molten steel capable of preventing metal components in molten steel from being reoxidized by reacting with oxides in molten slag, inhibiting occurrence of inclusions, and reducing nitrogen in the molten steel. The treatment method of molten steel in which a potential difference is applied between the molten steel and the molten slag by using a direct-current power supply and through two electrodes which are a negative electrode being an electrode in contact with the molten steel and a positive electrode being another electrode in contact with only the molten slag is characterized by including: a deoxidation step of deoxidizing the molten steel by adding a deoxidizing agent to the molten steel; and a step of applying the potential difference after the deoxidation step. Also provided is a steel production method by which the obtained molten steel is cast after components thereof are adjusted.

FIG. 1A

**EP 4 350 012 A1**

**Description**

Technical Field

The present invention relates to a treatment method of molten steel in which a potential difference is applied between molten steel and molten slag, specifically to the treatment method of molten steel in which the potential difference is applied between deoxidized molten steel that has been deoxidized and molten slag, and also relates to a steel production method using the molten steel prepared by the treatment method of molten steel.

Background Art

To reduce defects in steel sheets such as surface defects, it is important to decrease non-metallic inclusions (hereinafter, "inclusions") in the steel, which are one of the causes of such defects. To decrease such inclusions in the steel, various countermeasures have conventionally been taken (Nishiyama Kinen Gijutsu Koza, the 182 and 183rd Seminars, "Kaizaibutsu Seigyo to Koseijodo-ko Seizo Gijutsu" ("Controlling Inclusions and High-Cleanliness Steel Production Techniques" in Japanese), The Iron and Steel Institute of Japan, October 2004). One of the countermeasures is a technique for suppressing the formation of inclusions. The inclusions are caused by reoxidation of Al, Si, Ti, and other ingredients in deoxidized molten by reacting with air or oxides in the slag present on the molten steel in a ladle and/or a tundish. According to this technique, the degree of oxidation of the slag on the molten steel is reduced by shielding the ladle and/or the tundish.

For example, Patent Literature 1 discloses a method for completely sealing the interior of a tundish by tightly closing the space between a lid and the tundish completely and introducing Ar gas to the inside of the tundish to reduce the oxygen concentration in the tundish before molten steel is poured therein.

Patent Literature 2 discloses a method for producing high-cleanliness molten steel in which the content amounts of T, Fe, and MnO in the slag on molten steel are each ensured to be 1% by weight or less by adding a slag deoxidizing agent and a flux to the molten steel in a tundish. Patent Literature 3 also discloses a method for cleaning molten metal by adding a slag deoxidizing agent to the slag on molten steel and sealing the liquid surface of the slag with inert gas.

Non Patent Literature 1 discloses a dissolved oxygen concentration can be reduced by applying direct-current voltage from the outside to a slag-metal interface.

Nitrogen is a harmful component for metal materials. In conventional steelmaking processes, nitrogen $N_2$ in molten iron is removed by absorbing $N_2$ on the surfaces of carbon monoxide bubbles that form mainly during molten pig iron decarburization treatment. Accordingly, for molten steel having a low carbon concentration, the method cannot remove nitrogen to a low concentration because of a limited amount of produced carbon monoxide.

Whereas, to reduce $CO_2$ emissions, the steelmaking process needs to be shifted from conventional methods using a blast furnace or a converter to methods that dissolve scrap or reduced iron. This may result in obtaining molten iron with a low carbon concentration that cannot be used to produce low-nitrogen steel for the reason stated above.

To cope with this situation, some methods for removing nitrogen from molten steel using slag have been proposed. For example, Patent Literature 4 discloses a denitrification method for molten stainless steel in which the Al concentration in the molten steel is maintained to be 0.7 mass% or higher for at least five minutes in a VOD furnace to generate aluminum nitride (hereinafter, "AlN") for denitrification.

Patent Literature 5 discloses a denitrification method for molten steel involving producing molten steel in an electric furnace using iron scrap as a main iron source, discharging the molten steel into another refining vessel followed by holding the molten steel therein, adding a flux for denitrification purposes including an Al-containing substance, transferring AlN into slag, and blowing oxygen-containing gas on the molten steel to remove nitrogen.

Patent Literature 6 discloses a denitrification method for molten metal involving charging the molten metal into a refining vessel provided with a gas top-blowing function, covering the surface of the molten metal with slag mainly composed of CaO and $Al_2O_3$, and blowing oxidizing gas onto the surface of the covering slag face to such an extent that the gas is not in direct contact with the molten metal to remove nitrogen.

Patent Literature 7 discloses a denitrification method for molten steel in which a denitrification reaction for molten steel using slag is performed while applying direct-current voltage with electrodes arranged such that a positive electrode is positioned on the slag side and a negative electrode is positioned on the molten steel side.

Citation List

Patent Literature

Patent Literature 1: JP-S63-188460A
Patent Literature 2: JP-H8- 49011A
Patent Literature 3: JP-H01-294817A
Patent Literature 4: JP-H05-320733A
Patent Literature 5: JP-2007-211298A
Patent Literature 6: JP-H08-246024A
Patent Literature 7: JP-H04-9420A

Non Patent Literature

Non Patent Literature 1: Steelmaking, 28 (Aug. 2012) 4, pp. 47-50 (in Chinese)

Summary of Invention

Technical Problem

However, the conventional techniques described above have the following problems. According to the method described in Patent Literature 1 in which the interior of the tundish is completely sealed, a tundish lid is required to have a space so that a molten steel pouring nozzle can be inserted to pour the molten steel into the tundish. There is another problem where, when thermal deformation of the tundish lid and the tundish main body are taken into consideration, tightly closing the tundish in a complete manner can be difficult. If the sealing method described in Patent Literature 1 is implemented while the tundish is not tightly closed, blowing inert gas into the tundish will cause a problem where replacement of the inert gas may be insufficient because air may be drawn in through a pouring point or a gap of the tundish lid.

The method for producing high-cleanliness molten steel described in Patent Literature 2 has such a concern that not all of the slag deoxidizing agent may react with the slag. If part of the agent dissolves into the molten steel, the components will be out of standard, which may result in retreatment, changing to a different type of steel, or, in the worst case, scrapping of the molten steel. The molten metal cleaning method described in Patent Literature 3 raises the same concern as the molten steel production method described in Patent Literature 2 regarding slag deoxidation. The molten metal cleaning method described in Patent Literature 3 discloses that a sealing-purpose lid is provided for sealing the bath surface of the slag. However, as in the method for sealing the interior of the tundish described in Patent Literature 1, it appears to be difficult to achieve the tight seal completely without fail.

The technique for reducing the dissolved oxygen concentration in the steel described in Non Patent Literature 1 can reduce the amount of deoxidizing agent required at the time of deoxidizing molten steel and also reduce the number of occurring inclusions but cannot inhibit reactions of deoxidized components in the deoxidized molten steel caused by air or the slag. Therefore, it is unclear whether the technique has the effect of inhibiting the reoxidation.

Moreover, Non Patent Literature 1 relates to a voltage control technique (so-called constant voltage control). When molten iron comes into contact with an electrode immersed on the slag side due to a change of the molten metal surface caused by stirring, a voltage of tens of volts would be applied to the molten iron having substantially 0-$\Omega$ resistance. This would apply an extremely large electric current in the circuit. As a result, installing a countermeasure to allow such a large electric current and to protect equipment such as wiring, power capacity, current breaker function, and the like would be on an unrealistic scale, while failing to install the countermeasure would cause damage to the equipment. Therefore, this method cannot serve as a practical means for the operation.

Patent Literature 4 and Patent Literature 5 disclose techniques that generate AlN for denitrification and have a problem in that a part of the generated AlN may remain in the molten steel and may become a starting point of a crack during a casting process in a subsequent step.

In order to produce low-nitrogen steel containing several tens of mass ppm of nitrogen using the denitrification method involving the generation of AlN, an Al concentration approximately in the range of at least a few mass% to 10 mass% is required in view of the solubility product of Al and N. Alternatively, in order to utilize the denitrification reaction effectively, an initial nitrogen concentration at a level of several hundreds of mass ppm is required. The technique described in Patent Literature 4 and Patent Literature 5 has a problem in that the costs of steps for producing the low-nitrogen steel are too high and is applicable to only such certain types of steel as stainless steel containing a large amount of dissolved nitrogen.

The technique described in Patent Literature 6 lists the conditions for blocking the molten steel from the oxidizing gas as follows:

(1) the slag amount should be ensured to be at least 15 kg per 1 ton of molten steel; and
(2) the slag amount, the amount of bottom-blown gas, the composition and the flow rate of top-blown gas, the lance height, and the atmospheric pressure should be controlled within appropriate ranges.

However, the applicable conditions are not clear because the slag amount increases depending on the size of the vessel to be filled with the molten steel in the condition (1); and because no specific control means or control ranges are described and the method for determining whether the gas is blocked from the molten steel is not clear in the condition (2). Further, the present inventors conducted a test using the same ranges as those in the suitable examples described in Patent Literature 6 and confirmed that the method was not practical in actual operation because the denitrification rate was slowed down by nitrogen migration inhibition between the slag and the metal due to an increase in the apparent partial pressure of oxygen caused by the oxidizing gas at the slag-metal interface.

Patent Literature 7 discloses a method that can determine the denitrification capabilities by Expression (1), where $\Delta E$ (V) denotes voltage at the slag-metal interface.

[Expression 1]

$$L_N = L_N^0 \times \exp(3F / R / T \times \Delta E) \dots \quad (1)$$

where

$L_N^0$: equilibrium nitrogen distribution ratio (-) between the slag and the molten metal when no external voltage is applied;

$L_N$: equilibrium nitrogen distribution ratio (-) between the slag and the molten metal when external voltage is applied;

F: Faraday constant (C/mol);

R: gas constant (J/mol/K);

T: absolute temperature (K); and

$\Delta E$: potential (V) at the interface between the slag and the molten metal, when the molten metal side is the negative side.

However, in Expression (1) presented above, it is impossible to directly measure or control the value of $\Delta E$. Expression (1) is established only when nitrogen alone reacts inside the molten steel and the reaction thereof is not a diffusion-controlled reaction of the nitrogen, i.e., only when the relational expression "$\Delta E$ = activation overvoltage $\eta$ (V)" is satisfied. Whereas, the reaction in steel production is a competitive reaction in which a large number of elements react simultaneously. When no active stirring is applied to the reaction in steel production, the reaction tends to be a diffusion-controlled reaction in most cases. In view of these aspects, the present inventors confirmed that Expression (1) is not established in a reaction system having many elements and no stirring, which is the premise of the technique described in Patent Literature 7.

Accordingly, it is impossible to calculate the voltage to be applied to the circuit based on Expression (1) and resistance values of the circuit and the slag in accordance with a denitrification amount that is actually required. In other words, it is impossible to estimate the amount of electric current required to exercise current control as a means for applying a potential difference between the molten steel and the molten slag by the technique described in Patent Literature 7.

The present invention was made in view of the circumstances described above and proposes a treatment method of molten steel that can prevent metal components in molten steel from being reacted with oxides in molten slag and thus reoxidized, inhibiting the occurrence of inclusions, and that can reduce nitrogen in the molten steel. The present invention also proposes a steel production method using molten steel produced by the treatment method of molten steel.

Solution to Problem

A treatment method of molten steel of the present invention which advantageously solves the abovementioned problems includes using a direct-current power supply and applying a potential difference between molten steel and molten slag through two electrodes with a negative electrode being an electrode in contact with the molten steel and a positive electrode being another electrode in contact only with the molten slag. The treatment method of molten steel is characterized by including a deoxidation step of deoxidizing the molten steel by adding a deoxidizing agent to the molten steel and a step of applying the potential difference to the deoxidized molten steel that is obtained after the deoxidation step.

As used herein, the deoxidation step refers to the step in which metal oxides are formed through a reaction between the metal components included in the molten steel and free oxygen, which is caused by adding the deoxidizing agent to the molten steel and mixing, and up to when an excessive part of the deoxidizing agent is dissolved into the molten steel for the purpose of inhibiting reoxidation of the molten steel.

The treatment method of molten steel according to the present invention may have the following preferable problem-solving means:

(a) in the deoxidation step, the potential difference is applied between the molten steel and the molten slag;
(b) C/A (-), which is a ratio between a CaO concentration (mass%) and an $Al_2O_3$ concentration (mass%) in the molten slag, is ensured to be in a range of 0.4 to 1.8 inclusive when the potential difference is applied after the deoxidation step; and
(c) the applied current density is ensured to be 1000 $(A/m^2)$ or less when the potential difference is applied after the deoxidation step.

A steel production method according to the present invention is characterized in that molten steel produced by the treatment method of molten steel described above is cast after components thereof are arbitrarily adjusted.

Advantageous Effects of Invention

According to the present invention, it is possible to prevent the metal components in the molten steel from reacting with the oxides in the molten slag and reoxidized and to inhibit the occurrence of inclusions.

Brief Description of Drawings

FIG. 1A is a schematic view showing a molten steel treatment apparatus 101 used in an embodiment in which molten steel is refined in an RH vacuum degassing apparatus.
FIG. 1B is a schematic view showing a molten steel treatment apparatus 102 used in an embodiment in which molten steel is conveyed and held in a ladle or the like, and refined in a ladle refining furnace.
FIG. 1C is a schematic view showing a molten steel treatment apparatus 103 provided with a tundish serving as a buffer and used in an embodiment in which molten steel is supplied from a ladle to a continuous casting machine.
FIG. 2 presents a graph indicating a relationship between an applied current density $(A/m^2)$ and Ka/Ko (-) which is a ratio of reoxidation rate constants of aluminum, at the time of refining molten steel by implementing the treatment method of molten steel according to the present embodiment.
FIG. 3 presents a graph showing a relationship (a denitrification performance) between C/A (-), which is a ratio between a CaO concentration (mass%) and an $Al_2O_3$ concentration (mass%) in the molten slag, and achieved nitrogen concentrations (ppm).

Description of Embodiments

A treatment method of molten steel according to the present embodiments will be described below with reference to the drawings. A molten steel treatment apparatus used for carrying out the treatment method of molten steel of the present embodiments will be first described, and then the treatment method of molten steel according to the present embodiments will be described. The drawings are schematic and therefore depicted configurations may be different from actual configurations. Further, the embodiments described below are intended to illustrate apparatuses and methods for embodying the technical concept of the present invention and are not meant to specify possible configurations to those described below. In other words, it is possible to apply various modifications to the technical concept of the present invention within the technical scope set forth in the claims.

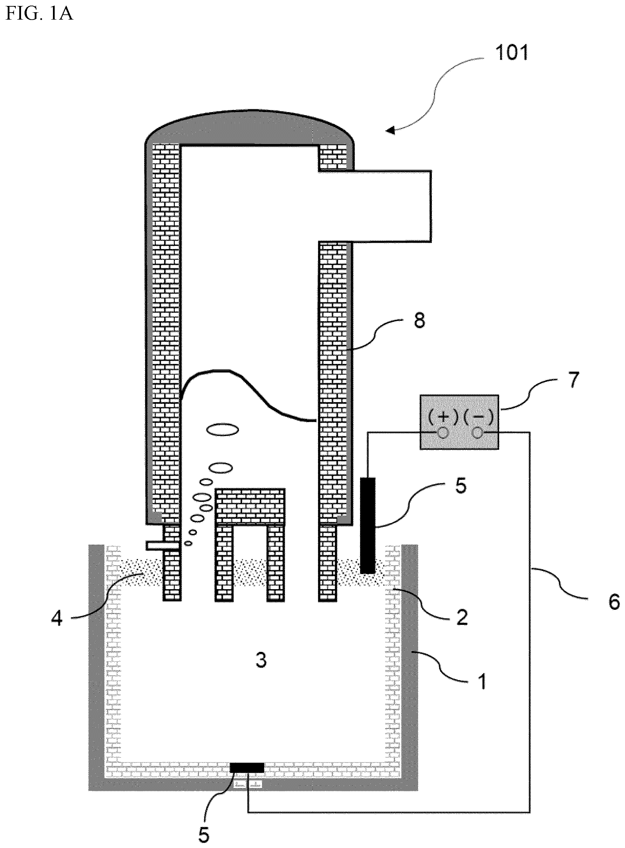

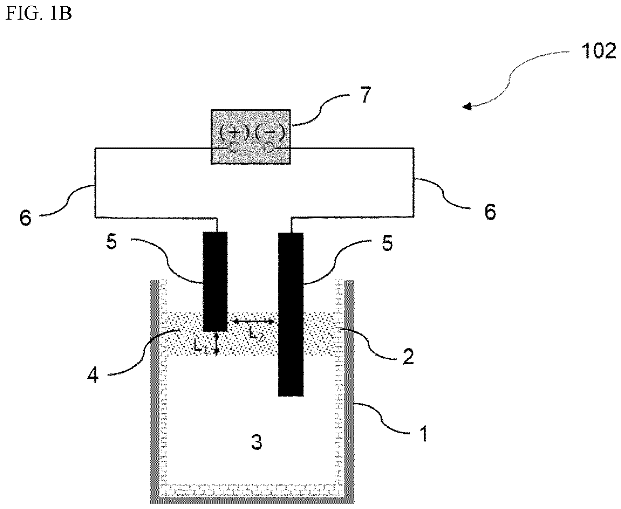

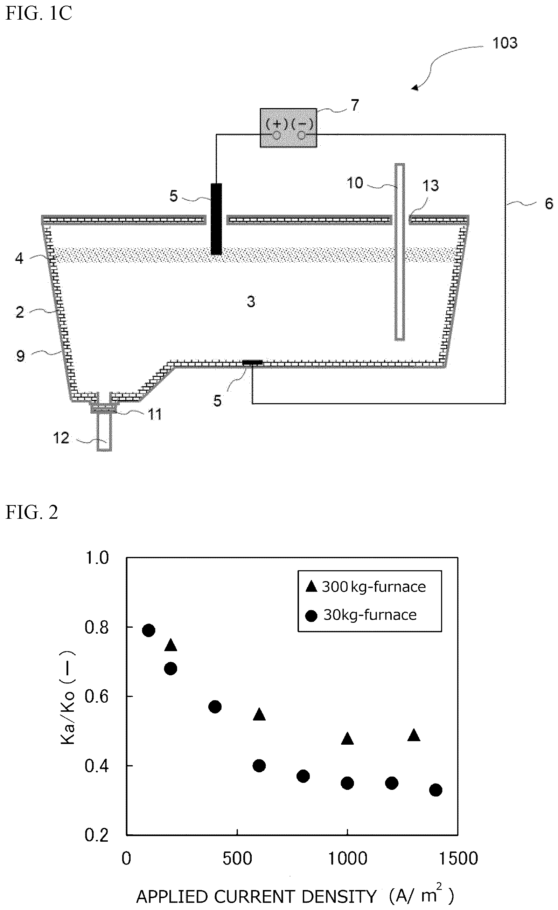

FIGs. 1A to 1C are schematic views of molten steel treatment apparatuses 101 to 103 suitable for carrying out the treatment method of molten steel according to the present embodiments. FIG. 1A is a schematic view showing the molten steel treatment apparatus 101 used in an embodiment in which molten steel is refined in an RH vacuum degassing apparatus 8. FIG. 1B is a schematic view showing the molten steel treatment apparatus 102 used in an embodiment in which molten steel is conveyed and held in a ladle or the like containing molten steel, and refined in a ladle refining furnace. FIG. 1C is a schematic view showing the molten steel treatment apparatus 103 provided with a tundish serving as a buffer and used in an embodiment in which molten steel is supplied from a ladle to a continuous casting machine. Next, the molten steel treatment apparatuses 101 to 103 will be described.

FIG. 1A is a schematic view showing the molten steel treatment apparatus 101 used in a treatment method of molten steel according to the present invention. The molten steel treatment apparatus 101 shown in FIG. 1A includes a ladle 1 to be filled with molten steel 3. The inner wall of the ladle 1 is lined with an insulating refractory 2. As the insulating refractory 2, an $Al_2O_3$-based brick or a refractory having an indeterminate form is often used in steel production. Alternatively, other types of insulating refractories having no electrical conductivity may be used as the insulating refractory 2.

In the molten steel treatment apparatus 101, the molten steel 3 is charged into a vessel such as the ladle 1 lined with the insulating refractory 2, and a flux is added thereon to form molten slag 4. Then, an immersion pipe provided in a lower part of the RH vacuum degassing apparatus 8 is immersed in the ladle 1 so as to perform a circulation process on the molten steel 3. On the inside of the ladle 1, an electrically conductive material (hereinafter, "conductive material") 5 is disposed on each of the two sides, namely the molten slag 4 side and the molten steel 3 side (on the furnace bottom in the example of the molten steel treatment apparatus 101 shown in FIG. 1A) and is connected to a direct-current stabilized power supply 7 through wires 6. The wire 6 connected to the conductive material 5 disposed on the molten slag 4 side is connected to the positive (+) side (a positive electrode) of the direct-current stabilized power supply 7, while the wire 6 connected to the conductive material 5 disposed on the molten steel 3 side is connected to the negative (-) side (a negative electrode) of the direct-current stabilized power supply 7.

In the example of the molten steel treatment apparatus 101, the conductive material 5 on the molten steel 3 side is disposed on the furnace bottom but may be disposed on a furnace wall of the ladle 1. Further, as shown in FIG. 1B described later, a part of the conductive material 5 disposed on the molten steel 3 side may be disposed to penetrate through the molten slag 4 and to be immersed in the molten steel 3. As the conductive material 5, a graphite shaft or an MgO-C-based refractory may be used. Alternatively, any other substance may be used as long as the substance has electrical conductivity and does not dissolve in the molten steel temperature zone (1400 to 1750°C).

By applying an electric current from an external power supply using the molten steel treatment apparatus 101 as shown in FIG. 1A, the electric current flows between the molten slag and the molten steel. Thus, applying a potential difference using the molten steel treatment apparatus 101 as shown in FIG. 1A by immersing the conductive material 5 each in the molten steel 3 and in the molten slag 4 can inhibit the reoxidation of the molten steel 3 when refined in the RH vacuum degassing apparatus 8.

FIG. 1B is a schematic view showing the molten steel treatment apparatus 102 used in a treatment method of molten steel according to the present invention. As shown in FIG. 1B, in the molten steel treatment apparatus 102, a part of the conductive material 5 disposed on the molten steel 3 side may be in contact with the molten slag 4. In that situation, it is necessary to ensure that the shortest distance $L_1$ from the tip end of the conductive material 5 immersed on the molten slag 4 side to the interface between the molten slag and the molten steel is shorter than the shortest distance $L_2$ between the surfaces formed by the two conductive material 5 in the molten slag 4. Alternatively, as shown in FIG. 1A, the conductive material 5 disposed on the molten steel 3 side may be disposed on the furnace bottom or the furnace wall of the ladle 1.

By applying an electric current from the direct-current stabilized power supply 7 using the molten steel treatment apparatus 102 as shown in FIG. 1B, the electric current flows between the molten slag and the molten steel. Thus, applying a potential difference between the conductive materials 5 immersed in the molten steel 3 and in the molten slag 4 using the molten steel treatment apparatus 102 as shown in FIG. 1B can inhibit the reoxidation of the molten steel 3 while being conveyed and in a standby mode before casting.

When the molten steel treatment apparatus 102 as shown in FIG. 1B is used to conduct ladle refining or the like, the denitrification of the molten steel can be promoted by controlling the composition in the molten slag 4 when the electric current is applied between the molten slag and the molten steel.

In this situation, it is preferable to install an injection lance or a bottom-blowing porous plug to the molten steel treatment apparatus 102 to blow gas into the molten steel 3 through those installed and to stir the bath.

It is also preferable to have the molten steel treatment apparatus 102 contained in a vacuum vessel to perform the treatment under a reduced-pressure atmosphere.

FIG. 1C is a schematic view showing the molten steel treatment apparatus 103 used in a treatment method of molten steel according to the present invention. As shown in FIG. 1C, the molten steel treatment apparatus 103 includes a tundish 9 used at the time of supplying the molten steel 3 from the ladle 1 to a continuous casting machine and used as a so-called buffer.

A long nozzle 10 is inserted into a tundish 9 to pour molten steel 3 into the main body of the tundish 9. A sliding nozzle 11 is provided in the bottom part of the tundish 9 to discharge the molten steel 3 poured into the main body of the tundish 9. An immersion nozzle 12 is provided below the sliding nozzle 11. When the sliding nozzle 11 is opened, the molten steel 3 poured into the main body of the tundish 9 is poured into a casting mold (not shown) through the immersion nozzle 12. Furthermore, a tundish lid 13 is provided on the tundish 9.

By applying a potential difference between the conductive materials 5 immersed in the molten steel 3 and in the molten slag 4 using the molten steel treatment apparatus 103 shown in FIG. 1C, the reoxidation of the molten steel 3 by air or oxides in the molten slag 4 in the ladle 1 during continuous casting can be effectively inhibited. A treatment method of molten steel according to the present embodiment using the molten steel treatment apparatuses 101 to 103 will be described.

[First Embodiment]

A treatment method of molten steel according to the first embodiment will be described. In the present embodiment, a treatment method of molten steel according to the present invention is applied when molten steel is refined by an RH vacuum degassing apparatus. The treatment method of molten steel according to the present embodiment includes, in applying a potential difference between the molten steel and the molten slag by using a direct-current power supply and through two electrodes, the negative electrode of which is in contact with the molten steel while the positive electrode of which is in contact only with the molten slag, a deoxidation step of deoxidizing the molten steel by adding a deoxidizing agent to the molten steel; and a step of applying the potential difference to the deoxidized molten steel obtained after the deoxidation step. These steps will be described below.

(The deoxidation step of deoxidizing the molten steel)

The treatment method of molten steel according to the present embodiment includes the deoxidation step of deoxidizing the molten steel. The deoxidation of the molten steel is carried out by adding the deoxidizing agent to the molten steel. Specifically, the following procedure may be taken: the molten steel 3 subject to decarburization refining in a converter is first discharged into the ladle 1. Note that the molten slag 4 is present on the molten steel 3 discharged into the ladle 1.

It is desirable to add an Al-containing slag modifier to the molten slag 4 as a slag deoxidizing agent. The Al-containing slag modifier is mainly composed of metal Al particles. The particle radius of each metal Al particle is preferably in the range of 2.0 to 10.0 mm. When the particle radius of the metal Al particle is in the abovementioned range, the Al-containing slag modifier does not dissolve into the molten steel 3 and sufficiently reacts with the low-grade oxides present in the molten slag 4 such as $FeO$, $Fe_2O_3$, and $MnO$, improving reaction efficiency.

The RH vacuum degassing apparatus 8 provided in the molten steel treatment apparatus 101 shown in FIG. 1A performs decarburization treatment and other processes on the molten steel 3. When the molten steel 3 is in a non-deoxidation state, the RH vacuum degassing refining by the RH vacuum degassing apparatus 8 advances the decarburization reaction of the molten steel 3.

The dissolved oxygen concentration of the oxygen present in the molten steel 3 is measured after the completion of the decarburization reaction of the molten steel 3. Based on the measured dissolved oxygen concentration, the amount of the deoxidizing agent required to deoxidize the oxygen present in the molten steel 3, as well as metal Al for the required composition or the like are determined. The deoxidizing agent is then added to the molten steel 3 in a vacuum tank to deoxidize the molten steel 3 through an input chute (not shown) and to adjust the components thereof. Adding the deoxidizing agent to the molten steel 3 removes the oxygen that was excessively added to the molten steel 3 in the steelmaking refining process of the molten steel 3 to remove impurities such as carbon, silicon, phosphorus, and/or the like. Examples of the deoxidizing agent used for deoxidizing the oxygen present in the molten steel 3 include particulate aluminum (metal Al), ferroalloys such as ferromanganese, ferrosilicon, ferrotitanium, and a calcium silicon alloy.

(The step of applying the potential difference to the deoxidized molten steel)

The treatment method of molten steel according to the present embodiment includes the step of applying the potential difference to the deoxidized molten steel obtained after the deoxidation step. The step of applying the potential difference after the deoxidation step is a step of applying the required potential difference between the deoxidized molten steel and the molten slag.

The potential difference applied between the deoxidized molten steel and the molten slag in the above step is required to be equal to or larger than the potential difference for applying an electric current between the deoxidized molten steel and the molten slag. The required potential difference can be determined by taking into account the overvoltage with the theoretical electrolysis voltage calculated thermodynamically from the components of the molten steel and the molten slag. It is possible to control the application of the potential difference in the step of applying the potential difference after the deoxidation step, either through current control or through voltage control.

In the voltage control (so-called constant voltage control), when a voltage of tens of volts is applied to the molten steel with substantially 0-$\Omega$ resistance under the situation where the electrode immersed in the molten steel comes into contact with the electrode immersed in the molten slag due to a change of the bath surface caused by stirring or other factors, an extremely large electric current would flow in the circuit. To allow such an extremely large electric current to flow in the circuit, the molten steel treatment apparatus would require protective devices for wiring, power capacity, current breaker function, and the like to be implemented, increasing the device cost of the molten steel treatment apparatus. In addition, when the protective devices cannot be implemented in the molten steel treatment apparatus, the relevant equipment would be damaged. Considering these technical matters, it is desirable to adopt the current control to apply the potential difference in the step of applying the potential difference after the deoxidation step.

As described above, in the treatment method of molten steel according to the first embodiment, the molten steel is deoxidized by adding the deoxidizing agent to the molten steel when refining the molten steel in the RH vacuum degassing apparatus. By applying the potential difference to the deoxidized molten steel, the reoxidation of the deoxidized molten steel due to air or oxides in the slag in the ladle can be efficiently inhibited.

[Second Embodiment]

A treatment method of molten steel according to the second embodiment will be described. Specifically, in the present embodiment, a treatment method of molten steel according to the present invention is applied when the ladle 1 is conveyed to the continuous casting machine to cast the molten steel 3 subjected to the RH vacuum degassing refining by continuous casting.

FIG. 1B is a schematic view showing the molten steel treatment apparatus 102 used in the embodiment in which the molten steel is conveyed and held in a ladle or the like and refined in a ladle refining furnace. As shown in FIG. 1B, a part of the conductive material 5 disposed on the molten steel 3 side may be in contact with the molten slag 4. In that situation, it is necessary to ensure that the shortest distance $L_1$ from the tip end of the conductive material 5 immersed on the molten slag 4 side to the interface between the molten slag and the molten steel is shorter than the shortest distance $-L_2$ between the surfaces of conductive materials 5 in the molten slag 4.

In this situation, the reoxidation of the molten steel 3 can be inhibited while it is being conveyed and in a standby mode before casting by applying the potential difference between the conductive materials 5 that are immersed in both the molten steel 3 and in the molten slag 4 as shown in FIG. 1B. Alternatively, the conductive material 5 disposed in the molten steel 3 may be disposed in the ladle 1 as shown in FIG. 1A.

As described above, in the treatment method of molten steel according to the second embodiment, the molten steel is deoxidized by adding the deoxidizing agent into the molten steel when the ladle 1 containing the molten steel 3 is conveyed to the continuous casting machine. By applying the potential difference to the deoxidized molten steel, the reoxidation of the molten steel due to air or the oxides in the molten slag can be efficiently inhibited when the ladle is conveyed to the continuous casting machine.

[Third Embodiment]

Next, a treatment method of molten steel according to a third embodiment will be described. Specifically, the treatment method of molten steel according to the present embodiment applies a treatment method of molten steel according to the present invention in a continuous casting process of the molten steel after the ladle is conveyed to the continuous casting machine.

FIG. 1C is a schematic view showing the molten steel treatment apparatus 103 provided with the tundish 9 serving as a buffer and used in the third embodiment. As shown in FIG. 1C, when arriving at the continuous casting machine, the ladle 1 is set over the tundish 9 so that the molten steel 3 is poured from the ladle 1 to the inside of the main body of the tundish 9 through the long nozzle 10. When the molten steel height of the molten steel 3 in the tundish 9 reaches a prescribed position, the sliding nozzle 11 is opened so that the molten steel 3 is poured into a casting mold (not shown) through the immersion nozzle 12, and the continuous casting process is thus started.

It is desirable to replace the inside of the tundish 9 with inert gas before the molten steel 3 is poured into the tundish 9. It is also desirable to introduce inert gas into the inside of the tundish 9 while the molten steel 3 is being cast. The flux serving as a source of the molten slag 4 should be added to the inside of the tundish 9 before the potential difference is applied through the conductive material 5. The flux may be a powder flux mainly composed of CaO.

When the height of the molten slag 4 becomes equal to the height of the conductive material 5 immersed on the molten slag 4 side, the potential difference is applied. This can inhibit the reoxidation of the molten steel in the subsequent processing steps. In this situation, the height of the conductive material 5 immersed on the molten slag 4 side may be fixed to a certain height equal to or higher than the upper limit of the molten steel 3; however, more preferably, it is possible to secure the time for applying the potential difference by adjusting the height of the conductive material 5 with the use of a mechanism capable of ascending and descending according to the height of the molten steel 3.

FIG. 1C is a schematic view of a tundish equipped with one strand in a continuous casting machine used for the treatment method of molten steel according to the present embodiment. However, since the same advantageous effect can be achieved with the tundish of a continuous casting machine including a plurality of strands, there is no particular limitation on the number of the strands provided in the continuous casting machine.

As described above, in the treatment method of molten steel according to the third embodiment, the reoxidation of the molten steel due to air or the oxides in the molten slag can be efficiently inhibited in the continuous casting of the molten steel by applying the potential difference to the deoxidized molten steel 3 when the deoxidized molten steel 3 is being conveyed.

In the treatment methods of molten steel according to the first to the third embodiments described above, it is desirable to apply the potential difference in all the implemented processes including the RH vacuum degassing refining on the molten steel, conveyance of the molten steel, and continuous casting of the molten steel. Since an advantageous effect can be obtained in each implemented process, there is no particular limitation to the performed processes.

[Fourth Embodiment]

A treatment method of molten steel according to a fourth embodiment will be described. The treatment method of molten steel according to the present embodiment is characterized by applying a potential difference in the deoxidation step of deoxidizing the molten steel involving adding the deoxidizing agent to the molten steel in the treatment method of molten steel according to the embodiments described above. In other words, the treatment method of molten steel according to the present embodiment is characterized by applying a pre-processing potential difference between molten steel before deoxidation and the molten slag as a pre-processing step for the deoxidation step of deoxidizing the molten steel, when performing the RH vacuum degassing refining and when conveying the ladle containing the poured molten steel resulting from the RH vacuum degassing refining to the continuous casting machine.

In the treatment method of molten steel according to the present embodiment, the pre-processing potential difference is applied between the molten steel 3 before deoxidation and the molten slag 4 through the conductive material 5 also at the time of deoxidizing the molten steel 3. Applying the pre-processing potential difference between the molten steel 3 before deoxidation and the molten slag 4 reduces the dissolved oxygen concentration in the molten steel 3, decreasing the required amount of deoxidizing agent. Furthermore, when the deoxidizing agent added into a vacuum tank flows into the ladle 1 due to insufficient reaction with the oxygen in the molten steel 3, the reoxidation of the molten steel 3 due to such a deoxidized component with a high concentration and the oxygen from the molten slag 4 or air and can be inhibited. Then, by applying a potential difference to the molten steel 3 deoxidized through the conductive material 5 when the temperature and the components of the molten steel 3 are adjusted, it is possible to further inhibit the reoxidation of deoxidized elements such as Al in the molten steel 3 which may be caused by the oxygen from the molten slag 4 and air.

As described above, in the treatment method of molten steel according to the fourth embodiment, in addition to deoxidizing the molten steel by adding the deoxidizing agent to the molten steel and applying the potential difference to the deoxidized molten steel, the potential difference is also applied in the deoxidation step of deoxidizing the molten steel. As a result, the reoxidation of the deoxidized molten steel by air or the oxides in the molten slag in the ladle can be prevented.

[Fifth Embodiment]

A treatment method of molten steel according to a fifth embodiment will be described. The treatment method of molten steel according to the present embodiment is characterized in that, in the treatment method of molten steel according to the embodiments described above, the potential difference should be applied at the current density equal to or lower than 1000 $(A/m^2)$. In other words, the treatment method of molten steel according to the present embodiment is characterized in that the applied current density $(A/m^2)$ is set to be in an optimum range, when the potential difference is applied in the RH vacuum degassing refining, during the conveyance from the ladle to the continuous casting machine for performing the continuous casting of the molten steel subjected to the RH vacuum degassing refining, and the continuous casting of the molten steel.

The reoxidation behavior by air or the molten slag of the metal components present in the deoxidized molten steel in the ladle by the deoxidizing agent such as Al becomes apparent by focusing on the Al concentration in the molten steel. In other words, when the Al concentration in the molten steel is at an Al concentration level required for Al deoxidized steel, the Al concentration in the molten steel decreases substantially in proportion to time. Thus, it is possible to define a reoxidation rate v by using Expression (2) presented below.

[Expression 2]

$$-\Delta[Al] / \Delta t = K \ . \ . \ . \quad (2)$$

In Expression (2) above, [Al] denotes the Al concentration in the molten steel; t denotes time; and K denotes a reoxidation rate constant. The reoxidation rate v is equal to K being the reoxidation rate constant.

FIG. 2 is a graph showing a relationship between the applied current density $(A/m^2)$ and Ka/Ko (-) which is a ratio of reoxidation rate constants. In the graph in FIG. 2, the black triangles plot an example in which the molten steel was refined by using a 300-kg furnace. The black dots plot an example in which the molten steel was refined by using a 30-kg furnace. Based on FIG. 2, a reoxidation rate constant Ka (mass%/min) when the potential difference was applied was compared with a reoxidation rate constant Ko (mass%/min) before the potential difference was applied.

As seen from FIG. 2, in the example in which the molten steel was refined by using the 30-kg furnace (with black dots) and in the example in which the molten steel was refined by using the 300-kg furnace (with black triangles), Ka/Ko (-), which is the ratio of the reoxidation rate constants, is dependent on the applied current density (A/m$^2$). As apparent from FIG. 2, the slope showing the increasing rate of the reoxidation rate constant Ka is small when the applied current density exceeds 1000 (A/m$^2$). Thus, increasing the applied current density is not expected to exert the effect of increasing the reoxidation rate constant when the applied current density exceeds 1000 (A/m$^2$). Therefore, in the treatment method of molten steel according to the present embodiment, it is desirable to apply the potential difference with the applied current density equal to or less than 1000 (A/m$^2$).

The applied current density obtained as described above is expressed as $J_a$ (A/m$^2$). To calculate a current amount $I_a$ (A) to be applied in the circuit based on the applied current density $J_a$ (A/m$^2$), it is possible to use a relational expression "The current amount $I_a$ (A) = the applied current density $J_a$ (A/m$^2$) $\times$ contact area A (m$^2$)". When the current amount $I_a$ (A) is calculated by using this relational expression, it is desirable to adopt the contact area A (m$^2$) between the molten slag and the molten steel contained in the ladle (vessel) as the contact area A (m$^2$). However, in an actual treatment of the molten steel, the accurate contact area A (m$^2$) is often unclear due to the impact of stirring applied to the molten steel or the like. Accordingly, the current amount $I_a$ (A) may be calculated by using an inside diameter cross-sectional area A' (m$^2$) of the apparatus at the position of the interface between the molten slag and the molten steel, as the contact area A (m$^2$), taking into account the insulating refractory 2 lining the ladle 1 (vessel).

The reason is that the molten slag 4 itself behaves, through the conductive material 5, as the positive (+) electrode while the molten steel 3 itself behaves as the negative (-) electrode. The present inventors have confirmed that changing the cross-sectional area ratio between the tip end portions of the conductive material 5 on the molten slag 4 side and of the conductive material 5 on the molten steel 3 side does not affect the reoxidation rate.

As described above, in the treatment method of molten steel according to the fifth embodiment, the reoxidation of the deoxidized molten steel in the ladle due to air or the oxides in the molten slag can be efficiently inhibited by applying the potential difference at the current density equal to or lower than 1000 (A/m$^2$). Although the potential difference is preferably applied in all the processes performed, such as the RH vacuum degassing refining, ladle conveying, and continuous casting, an advantageous effect can be obtained in any of the processes performed. Accordingly, the treatment methods of molten steel according to the present invention are applicable without particularly limiting the processes performed.

[Sixth Embodiment]

A treatment method of molten steel according to a sixth embodiment will be described. The treatment method of molten steel according to the present embodiment is characterized in that, in the treatment method of molten steel according to the embodiments described above, the potential difference is applied after the deoxidation step such that C/A (-), which is the ratio between the CaO concentration (mass%) and the Al$_2$O$_3$ concentration (mass%) in the molten slag is ensured in the range of 0.4 to 1.8 inclusive. In other words, the nitrogen concentration in the molten steel during the application of the potential difference to the deoxidized molten steel was investigated in the treatment method of molten steel according to the present embodiment, and it was newly discovered that denitrification also proceeded simultaneously with deoxidation under certain conditions.

Regarding the discovery, the present inventors have made a detailed study of conditions under which denitrification can proceed by applying the potential difference, focusing on the Al concentration (Al) in the molten steel. In the course of the study, we found that the molten metal denitrification method described in Patent Literature 6 above requires the Al concentration [Al] in molten steel to be in the range of 0.3 mass% to 2 mass% in order for the denitrification to proceed. We also found that the denitrification could proceed even when the Al concentration was 0.1 mass% or less, but there was a large variance in nitrogen concentration levels reached.

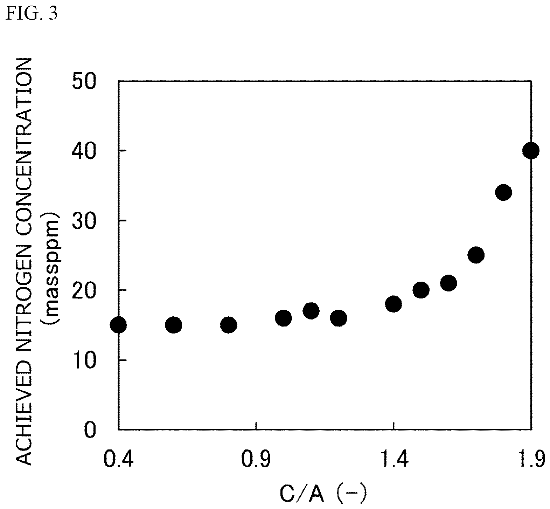

Therefore, regarding the treatment method of molten steel according to the present embodiment, we studied the impact of the molten slag composition, especially, the impact of C/A (-), which is the ratio between the CaO concentration (mass%) and the Al$_2$O$_3$ concentration (mass%) in the molten slag, upon denitrification. Specifically, in the production of slag containing CaO and Al$_2$O$_3$ by 15 kg/t or more involving melting 15 kg of molten steel in a compact high-frequency vacuum induction melting furnace and adjusting the Al concentration [Al] to be 0.1 mass%, we measured the achieved nitrogen concentrations (mass ppm) obtained when the C/A (-) was varied in the range of 0.4 to 2.0. FIG. 3 shows a relationship (denitrification performance) between C/A (-), which is the ratio between the CaO concentration (mass%) and the Al$_2$O$_3$ concentration (mass%) in the molten slag, and the achieved nitrogen concentrations (ppm).

As shown in FIG. 3, the denitrification performance remained unchanged while C/A (-) was in the range of 0.4 to 1.2. The denitrification performance started to decrease at the point where C/A exceeded 1.2. The achieved nitrogen concentration (mass ppm) rapidly increased when C/A exceeded 1.6 and could not reach the low nitrogen concentration zone (where the nitrogen concentration is 35 mass ppm or less) when C/A exceeded 1.8. As observed herein, the higher the slag formation ratio, the more advantageous the molten slag composition is for the denitrification reaction. It is preferable when the mass ratio C/A between CaO and $Al_2O_3$ is in the range of 0.4 to 1.8, and more preferably, in the range of 0.7 to 1.7. In other words, to progress the denitrification in the treatment method of molten steel according to the present embodiment, it is desirable to maintain C/A (-) in the molten slag within the range of 0.4 to 1.8, inclusive, when applying the potential difference.

In the treatment method of molten steel according to the present embodiment, although a lower MgO concentration in the molten slag is more desirable to accelerate the denitrification, the molten slag 4 may contain MgO, in view of the product life of refractories in the ladle or the like. The MgO concentration in the molten slag 4 is preferably 5.0 mass% or less. When the MgO concentration needs to be increased, it is preferable to increase the temperature of the molten steel by 5°C or more for each 1.0 mass% increase in the MgO concentration above 5.0 mass% from the viewpoint of protecting refractories in the ladle or the like. Further, the lower limit of the MgO concentration in the molten slag is not particularly limited and may be 0 mass%.

In the treatment method of molten steel according to the present embodiment, the denitrification can be promoted by applying the potential difference between the conductive material 5 immersed in the molten steel 3 and the conductive material 5 in the molten slag 4 having the C/A (-) value in the range of 0.4 to 1.8 inclusive using the molten steel treatment apparatus 102 shown in FIG. 1B. As shown in FIG. 1A, the conductive material 5 disposed on the molten steel 3 side may be disposed on the ladle 1.

In the treatment method of molten steel according to the present embodiment, it is more preferable to stir the bath by blowing gas into the molten steel 3 through an injection lance or a bottom-blowing porous plug. The stirring power density used during the stirring may have an upper limit of approximately 5000 W/t because when a large amount of gas is blown in, the gas will escape without being effectively utilized. The upper limit may be appropriately set within the range where the increase in the stirring power density does not cause any potential problems (e.g., adhesion of the scull to the furnace lid).

In the treatment method of molten steel according to the present embodiment, it is more preferable to refine the molten steel under a reduced-pressure atmosphere. When the treatment method of molten steel according to the present embodiment is implemented under a reduced-pressure atmosphere, the atmospheric pressure is preferably $1.0 \times 10^5$ Pa or less, and more preferably, $0.7 \times 10^5$ Pa or less. Further, when the treatment method of molten steel according to the present embodiment is implemented under a reduced-pressure atmosphere, it is desirable to ensure the lower limit of the atmospheric pressure to be approximately $1.0 \times 10^3$ Pa because reducing the pressure excessively will lead to an increase in the equipment cost such as that of an exhaustion system.

As described above, in the treatment method of molten steel according to the sixth embodiment, the denitrification of the molten steel can be promoted without increasing the Al concentration [Al] in the molten steel by deoxidizing the molten steel 3 and applying the potential difference between the deoxidized molten steel 3 and the molten slag 4 of which the composition is controlled.

[Seventh Embodiment]

A steel production method according to a seventh embodiment will be described. The steel production method according to the present embodiment is characterized by casting the molten steel produced by the treatment method of molten steel according to the embodiments described above, after arbitrarily adjusting the components thereof. In other words, a technical characteristic of the steel production method according to the present embodiment lies in casting the molten steel prepared by the treatment method of molten steel according to the embodiments described above. That is, in the steel production method according to the present embodiment, the molten steel produced by the treatment method of molten steel according to the embodiments described above is used as a casting material of the steel.

The molten steel prepared by the treatment method of molten steel according to the embodiments described above is molten steel in which inclusions have been decreased and which has a low nitrogen content. Accordingly, it is possible to adjust the components thereof easily. In the steel production method according to the present embodiment, the processes of adjusting the components of the molten steel and casting the molten steel are not particularly limited and may be performed with commonly-used methods. In the steel production method according to the present embodiment, since the molten steel in which inclusions have been decreased and which has a low nitrogen content is used as a casting material of the steel, the steel produced by the steel production method according to the present embodiment is steel in which inclusions have been decreased and which has a low nitrogen content.

In other words, as a result of using steel produced by implementing the steel production method according to the present embodiment as a material of a steel product, a steel product having a low nitrogen content and fewer defects such as surface defects can be obtained. From such a technical viewpoint, the use of the steel product obtained by implementing the steel production method according to the present embodiment is not limited, and the steel product is suitable for a wide range of use. In particular, the steel production method is especially suitable for thin steel sheets and thick steel sheets produced through rolling processes, as well as steel products produced by using these sheets.

As described above, by using the steel production method according to the seventh embodiment, it is possible to produce steel having a low nitrogen content and fewer defects such as surface defects by adopting the treatment method of molten steel according to the embodiments described above and also casting the molten steel in which the occurrence of inclusions is inhibited.

[Other Embodiments]

Although the present invention has been described with reference to the embodiments, the present invention is not limited to the embodiments described above. To the configurations and the details of the present invention, it is possible to apply various modifications that are comprehensible to a person skilled in the art within the technical scope of the present invention.

Examples

<Example 1>

Approximately 300 tons of molten steel having a carbon concentration in the range of 0.02 to 0.06 mass% was discharged in a non-deoxidation state from a converter into a ladle with an inside diameter of 3.6 m. After the discharge, a vacuum decarburization treatment was performed in an RH vacuum degassing apparatus to adjust the carbon concentration to be in the range of 0.01 to 0.02 mass%, and metal Al was added in an amount corresponding to the dissolved oxygen concentration in the molten steel.

Then, a wire was connected from the molten slag to the positive (+) electrode of an external power supply through a graphite shaft, and another wire was connected from the molten steel to the negative (-) electrode of the external power supply through an MgO-C brick. While the RH apparatus was performing the circulation process such as adjusting the components of the molten steel, an electric current was applied in the circuit by implementing a constant current application method using a direct-current stabilized power supply. After adjusting the temperature and the components of the molten steel by the RH circulation process, samples of the molten steel in the ladle were taken and analyzed. Comparative Examples ((Nos. 9 to 13) were also processed in the same manner.

The processing conditions included setting Al mass% concentrations in the molten steel after three minutes had elapsed since the RH deoxidation; applied current density Ja (A/m$^2$) at the time of applying the potential difference; and processing time (minutes) after the RH deoxidation. We then evaluated the inhibition of the reoxidation of the molten steel by calculating reoxidation rate constant K (mass%/min) values under the various processing conditions, as well as reoxidation rate constant ratio Ka/Ko (-) values, which are ratios between the Al reoxidation rate constant Ka values of Nos. 1 to 8 subjected to the application of the electric current serving as Invention Examples and an average reoxidation rate constant Ko value of Nos. 9 to 13 subjected to no application of the electric current serving as Comparative Examples. Table 1 shows the processing conditions and processing results.

[Table 1]

| No. | Al concentration (mass%) three minutes after RH deoxidation | Applied current density Ja (A/m²) | Processing time (min) after RH deoxidation | Al concentration (mass%) after RH | Reoxidation rate constant K (mass%/min) | Reoxidation rate constant ratio Ka/Ko(-) | Remarks |
|---|---|---|---|---|---|---|---|
| 1 | 0.045 | 10 | 7 | 0.033 | 0.00171 | 0.90 | Invention Example |
| 2 | 0.039 | 100 | 7 | 0.029 | 0.00143 | 0.75 | Invention Example |
| 3 | 0.041 | 100 | 6 | 0.032 | 0.00150 | 0.79 | Invention Example |
| 4 | 0.041 | 200 | 9 | 0.028 | 0.00144 | 0.76 | Invention Example |
| 5 | 0.032 | 600 | 5 | 0.026 | 0.00120 | 0.63 | Invention Example |
| 6 | 0.036 | 600 | 6 | 0.028 | 0.00133 | 0.70 | Invention Example |
| 7 | 0.034 | 1000 | 8 | 0.025 | 0.00113 | 0.59 | Invention Example |
| 8 | 0.048 | 1200 | 7 | 0.040 | 0.00114 | 0.60 | Invention Example |
| 9 | 0.052 | 0 | 8 | 0.036 | 0.00200 | 1.05 | Comparative Example |
| 10 | 0.044 | 0 | 5 | 0.035 | 0.00180 | 0.94 | Comparative Example |
| 11 | 0.039 | 0 | 7 | 0.027 | 0.00171 | 0.90 | Comparative Example |
| 12 | 0.031 | 0 | 7 | 0.018 | 0.00186 | 0.97 | Comparative Example |
| 13 | 0.043 | 0 | 6 | 0.030 | 0.00217 | 1.14 | Comparative Example |

As shown in Table 1, Nos. 1 to 8 (Invention Examples), which were subjected to the application of the electric current, exhibited smaller reoxidation rate constant values than Nos. 9 to 13 (Comparative Examples), which were not subjected to the application of the electric current. This shows that the reoxidation of the metal components in the molten steel was successfully inhibited. The test (No. 8) where the electric current was applied at an applied current density larger than 1000 (A/m$^2$) exhibited a reoxidation rate that was not different from the test (No. 7) where the electric current was applied at an applied current density of 1000 (A/m$^2$). As seen from the result, applying the electric current at a current density exceeding 1000 (A/m$^2$) did not have much impact on the reoxidation rate.

<Example 2>

Approximately 300 tons of molten steel having a carbon concentration in the range of 0.02 to 0.06 mass% was discharged in a non-deoxidation state from a converter into a ladle having an inside diameter of 3.6 m. Then, a vacuum decarburization was performed in an RH vacuum degassing apparatus to reduce the carbon concentration in the molten steel to 0.003 mass% or less. Then, a wire was connected from the molten slag to the positive (+) electrode of an external power supply through a graphite shaft, and another wire was connected from the molten steel to the negative (-) electrode of the external power supply through an MgO-C brick. While the RH vacuum degassing apparatus was performing the circulation process such as adjusting the components, an electric current was applied in the circuit by implementing a constant current application method using a direct-current stabilized power supply.

The dissolved oxygen in the molten steel was then measured by using a dissolved oxygen measuring probe. Metal Al is added in an amount to perform deoxidation and to have 0.035 mass% Al remaining in the molten steel when no electric current was applied. While the electric current was being applied even after the metal Al was added, the temperature and the components of the molten steel were adjusted by the RH circulation process, and samples of the molten steel in the ladle were then taken and analyzed. For comparison, samples without the electric current flow were processed in the same manner.

The processing conditions included setting Al concentrations (mass%) in the molten steel after the elapse of three minutes from the RH deoxidation; applied current density Ja (A/m$^2$) in applying the potential difference; oxygen concentrations [O] (mass ppm) in applying the electric current; Al concentrations (mass%) in the molten steel after the elapse of three minutes from the RH deoxidation; processing time (minutes) after the RH deoxidation; and Al concentrations (mass%) in the molten steel after the completion of the RH deoxidation. We then measured the reoxidation rate constant K (mass%/min) values under the various processing conditions. In addition, we evaluated the inhibition of the reoxidation by calculating the reoxidation rate constant ratio Ka/Ko (-) values, which are ratios between the Al reoxidation rate constant Ka values from Nos. 14 to 18 serving as Invention Examples, where the electric current was applied, and an average reoxidation rate constant Ko value from Nos. 19 to 21 serving as Comparative Examples, where no electric current was applied. Table 2 shows the processing conditions and processing results.

[Table 2]

| No. | [O] (massppm) at completion of RH decarburization | Applied current density Ja (A/m²) | [O] (massppm) when applying current | Al concentration (mass%) three minutes after RH deoxidation | Processing time (min) after RH deoxidation | Al concentration (mass%) at completion of RH | Reoxidation rate constant K (mass%/min) | Reoxidation rate constant ratio Ka/Ko (-) | Remarks |
|---|---|---|---|---|---|---|---|---|---|
| 14 | 352 | 50 | 180 | 0.039 | 6 | 0.030 | 0.00150 | 0.79 | Invention Example |
| 15 | 288 | 50 | 138 | 0.041 | 7 | 0.031 | 0.00143 | 0.75 | Invention Example |
| 16 | 297 | 100 | 118 | 0.046 | 8 | 0.035 | 0.00138 | 0.72 | Invention Example |
| 17 | 334 | 200 | 104 | 0.051 | 7 | 0.041 | 0.00143 | 0.75 | Invention Example |
| 18 | 245 | 600 | 77 | 0.053 | 8 | 0.042 | 0.00138 | 0.72 | Invention Example |
| 19 | 262 | 0 | 262 | 0.033 | 5 | 0.024 | 0.00180 | 0.94 | Comparative Example |
| 20 | 336 | 0 | 336 | 0.036 | 5 | 0.026 | 0.00200 | 1.05 | Comparative Example |
| 21 | 277 | 0 | 277 | 0.033 | 6 | 0.022 | 0.00183 | 0.96 | Comparative Example |

As shown in Table 2, Nos. 14 to 18 (Invention Examples), where the electric current was applied, exhibited higher Al concentrations in the molten steel three minutes after the RH deoxidation and slower reoxidation rates than Nos. 19 to 21 (Comparative Examples), where no electric current was applied. This shows that the reoxidation of the molten steel was successfully inhibited.

<Example 3>

Ar gas was blown into a 30-ton capacity tundish for a single-strand continuous casting machine with a lid thereon. Placed in the tundish was a binary-based flux of $CaO-Al_2O_3$, a ternary-based flux of $CaO-Al_2O_3-MgO$, or a quaternary-based flux of $CaO-Al_2O_3-SiO_2-MgO$.

Low-carbon steel with a carbon concentration of 0.03 mass% in the molten steel was poured from a ladle into the tundish through a long nozzle. Casting was started when the liquid surface height of the molten steel in the tundish reached a prescribed position after the start of the pouring of the low-carbon steel. When the liquid surface level of the molten steel in the tundish became constant, a wire was connected from molten slag to the positive (+) electrode of an external power supply through a graphite shaft, and another wire was connected from the molten steel to the negative (-) electrode of the external power supply through an MgO-C brick, so that an electric current was caused to flow in the circuit by implementing a constant current application method using a direct-current stabilized power supply. Table 3 shows the processing conditions and the processing results.

The processing conditions included setting Al concentrations in the molten steel after the RH process (after the deoxidation); throughput (t/hr); and applied current density Ja ($A/m^2$) when applying the potential difference. As the processing results, the cleanliness degree of a slab formed by the molten steel after applying the potential difference was evaluated; specifically, a sample was taken from the slab at an intermediate casting stage to count the number of oxides in the steel. The ratio (slab cleanliness degree (index)) between an average number of oxides in the sample steels Nos. 22 to 26 (Invention Examples) where the electric current was applied and an average number of oxides in the sample steels Nos. 27 to 29 (Comparative Examples) where the electric current was not applied was calculated to evaluate the inhibition of the reoxidation of the molten steel. Note that the number of oxides in the molten steel was counted by grinding a cross-sectional plane of each sample and analyzing the components with a scanning electron microscope

[Table 3]

| No. | Al concentration (mass%) at completion of RH | Throughput (t/hr) | Applied current density Ja ($A/m^2$) | Slab cleanliness index (index) | Remarks |
|---|---|---|---|---|---|
| 22 | 0.036 | 5.2 | 50 | 0.86 | Invention Example |
| 23 | 0.029 | 3.5 | 50 | 0.83 | Invention Example |
| 24 | 0.027 | 5.5 | 100 | 0.81 | Invention Example |
| 25 | 0.028 | 5.2 | 500 | 0.77 | Invention Example |
| 26 | 0.032 | 3.8 | 500 | 0.74 | Invention Example |
| 27 | 0.028 | 5.2 | 0 | 1.03 | Comparative Example |
| 28 | 0.035 | 5.5 | 0 | 1.01 | Comparative Example |
| 29 | 0.040 | 3.3 | 0 | 0.96 | Comparative Example |

As shown in Table 3, Nos. 22 to 26 (Invention Examples) where the electric current was applied all have a slab cleanliness degree (index) less than 1.0, in contrast to Nos. 27 to 29 (Comparative Examples) where no electric current was applied, which indicates that the number of oxides in the steel was successfully reduced.

<Example 4>

Approximately 160 tons of molten steel with a carbon concentration in the range of 0.02 to 0.06 mass% was discharged in a non-deoxidation state from an electric furnace into a ladle having an inside diameter of 2.9 m. After discharging the molten steel, a medium solvent and metal Al serving as a deoxidizing agent were input in an LF desulfurization apparatus to deoxidize the molten steel and to form and melt quaternary-based slag of $CaO$-$SiO_2$-$Al_2O_3$-$MgO$ by arc heating. After that, a wire was connected from the molten slag to the positive (+) electrode of an external power supply through a graphite shaft, and another wire was connected from the molten steel to the negative (-) electrode of the external power supply through an MgO-C brick. As Invention Examples, an electric current was applied in the circuit by a constant current application method using a direct-current stabilized power supply to perform denitrification on the molten steel (Nos. 30 to 37).

Note that the molten steel was stirred by blowing Ar into the molten steel through a ladle bottom-blowing plug at a flow rate of 450 to 900 L per minute during the denitrification of the molten steel.

Samples of the molten steel in the ladle were obtained before and after the denitrification and were analyzed. As Comparative Examples, the denitrification was performed on the molten steel without applying the electric current (Nos. 38 and 39). Table 4 shows the processing conditions and processing results.

[Table 4]

| No. | N concentration (massppm) before processing | C/A (-) | Applied current density Ja (A/m$^2$) | Bottom-blown Ar (NL/min) | Processing time (min) | N concentration (massppm) after processing | Remarks |
|---|---|---|---|---|---|---|---|
| 30 | 60 | 1.7 | 50 | 450 | 20 | 39 | Invention Example |
| 31 | 60 | 1.7 | 50 | 900 | 20 | 35 | Invention Example |
| 32 | 60 | 1.7 | 500 | 450 | 20 | 22 | Invention Example |
| 33 | 60 | 1.7 | 500 | 900 | 20 | 20 | Invention Example |
| 34 | 60 | 1.7 | 1000 | 450 | 20 | 15 | Invention Example |
| 35 | 60 | 1.7 | 1000 | 900 | 20 | 12 | Invention Example |
| 36 | 60 | 1.7 | 1300 | 450 | 20 | 15 | Invention Example |
| 37 | 60 | 1.7 | 1300 | 900 | 20 | 12 | Invention Example |
| 38 | 60 | 1.7 | 0 | 450 | 20 | 47 | Comparative Example |
| 39 | 60 | 1.7 | 0 | 900 | 20 | 44 | Comparative Example |

Table 4 shows that Nos. 30 to 37 (Invention Examples) where the denitrification was performed on the molten steel by applying the electric current in the circuit have advanced denitrification compared to Nos. 38 and 39 (Comparative Examples) in which the denitrification was performed on the molten steel without applying the electric current in the circuit. Further, Nos. 36 and 37 (Invention Examples) where the denitrification was performed on the molten steel by applying the electric current in the circuit at an applied current density exceeding 1000 (A/m$^2$) have similar denitrification performances as compared with Nos. 34 and 35 (Invention Examples) at an applied current density of 1000 (A/m$^2$). These results show that performing the denitrification on the molten steel by applying the electric current at an applied current density exceeding 1000 (A/m$^2$) has less effect on the denitrification performances.

As described above, the treatment method of molten steel according to the present invention can decrease the reoxidation rate constant of the metal components in the molten steel to prevent reoxidation and thereby inhibit the occurrence of inclusions by applying the potential difference to the molten steel after the deoxidation step, improving the cleanliness degree of the molten steel.

Industrial Applicability

The treatment method of molten steel according to the present invention is extremely useful in industry such as the iron industry, because it is possible to prevent the metal components in the molten steel from being reoxidized by reacting with the oxides in the molten slag and possible to inhibit the occurrence of inclusions.

Reference Signs List

101: molten steel treatment apparatus (at the time of RH vacuum degassing refining)
102: molten steel treatment apparatus (at the time of conveying a ladle)
103: molten steel treatment apparatus (at the time of performing continuous casting)
1: ladle (vessel)
2: insulating refractory
3: molten steel
4: molten slag
5: conductive material (conductive refractory)
6: wire
7: direct-current stabilized power supply
8: RH vacuum degassing apparatus
9: tundish
10: long nozzle
11: sliding nozzle
12: immersion nozzle
13: tundish lid

**Claims**

1. A treatment method of molten steel comprising using a direct-current power supply and applying a potential difference between molten steel and molten slag through two electrodes with a negative electrode being an electrode in contact with the molten steel and a positive electrode being another electrode in contact only with the molten slag, **characterized in that**

   the treatment method of molten steel comprises
   a deoxidation step of deoxidizing the molten steel by adding a deoxidizing agent to the molten steel and
   a step of applying the potential difference to the deoxidized molten steel that is obtained after the deoxidation step.

2. The treatment method of molten steel according to claim 1, wherein
   in the deoxidation step, the potential difference is applied between the molten steel and the molten slag.

3. The treatment method of molten steel according to claim 1 or 2, wherein
   C/A (-), which is a ratio between a CaO concentration (mass%) and an $Al_2O_3$ concentration (mass%) in the molten slag, is ensured to be in a range of 0.4 to 1.8 inclusive when the potential difference is applied after the deoxidation step.

4. The treatment method of molten steel according to any one of claims 1 to 3, wherein
   the potential difference is applied at an applied current density of 1000 $(A/m^2)$ or less after the deoxidation step.

5. A steel production method, **characterized in that** the molten steel prepared by the treatment method of molten steel according to any one of claims 1 to 4 is cast after components thereof are arbitrarily adjusted.

FIG. 1A

FIG. 1B

FIG. 1C

FIG. 2

FIG. 3

## INTERNATIONAL SEARCH REPORT

International application No.

**PCT/JP2022/023737**

### A. CLASSIFICATION OF SUBJECT MATTER

***C21C 7/06***(2006.01)i; ***C21C 7/10***(2006.01)i
FI: C21C7/06; C21C7/10 B; C21C7/10 Z

According to International Patent Classification (IPC) or to both national classification and IPC

### B. FIELDS SEARCHED

Minimum documentation searched (classification system followed by classification symbols)

C21C7/06; C21C7/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | CN 102146496 A (ANGANG STEEL CO., LTD.) 10 August 2011 (2011-08-10) claims, paragraphs [0020], [0021], fig. 1 | 1-5 |
| Y | CN 201660669 U (ANGANG STEEL CO., LTD.) 01 December 2010 (2010-12-01) claims, paragraphs [0010], [0011], drawings | 1-5 |
| Y | CN 202925057 U (UNIVERSITY OF SHANGHAI) 08 May 2013 (2013-05-08) claims, paragraph [0025], fig. 3 | 1-5 |
| Y | CN 101457276 A (UNIVERSITY OF SHANGHAI) 17 June 2009 (2009-06-17) claims, p. 6, line 22 to p. 7, line 15, fig. 1 | 1-5 |
| Y | JP 2014-25111 A (JFE STEEL CORP.) 06 February 2014 (2014-02-06) paragraph [0014] | 1-5 |
| Y | JP 2019-18238 A (NIPPON STEEL & SUMITOMO METAL CORP.) 07 February 2019 (2019-02-07) paragraph [0014] | 1-5 |

☑ Further documents are listed in the continuation of Box C.       ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **04 August 2022** | **16 August 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**

International application No.

**PCT/JP2022/023737**

**C.    DOCUMENTS CONSIDERED TO BE RELEVANT**

| Category* | Citation of document, with indication, where appropriate, of the relevant passages | Relevant to claim No. |
|---|---|---|
| Y | WO 2020/183841 A1 (JFE STEEL CORP.) 17 September 2020 (2020-09-17)<br>paragraph [0009] | 1-5 |
| Y | WO 2007/091700 A1 (JFE STEEL CORP.) 16 August 2007 (2007-08-16)<br>claims | 3 |
| Y | JP 2018-104805 A (NIPPON STEEL & SUMITOMO METAL CORP.) 05 July 2018<br>(2018-07-05)<br>paragraph [0051] | 3 |
| Y | JP 2011-516720 A (POSCO) 26 May 2011 (2011-05-26)<br>claims | 3 |

Form PCT/ISA/210 (second sheet) (January 2015)

**INTERNATIONAL SEARCH REPORT**
Information on patent family members

International application No.

**PCT/JP2022/023737**

| Patent document cited in search report | | | Publication date (day/month/year) | Patent family member(s) | | | Publication date (day/month/year) |
|---|---|---|---|---|---|---|---|
| CN | 102146496 | A | 10 August 2011 | (Family: none) | | | |
| CN | 201660669 | U | 01 December 2010 | (Family: none) | | | |
| CN | 202925057 | U | 08 May 2013 | (Family: none) | | | |
| CN | 101457276 | A | 17 June 2009 | (Family: none) | | | |
| JP | 2014-25111 | A | 06 February 2014 | (Family: none) | | | |
| JP | 2019-18238 | A | 07 February 2019 | (Family: none) | | | |
| WO | 2020/183841 | A1 | 17 September 2020 | JP | 6744600 | B1 | |
| | | | | KR | 10-2021-0109597 | A | |
| | | | | CN | 113490755 | A | |
| WO | 2007/091700 | A1 | 16 August 2007 | US claims | 2009/0019968 | A1 | |
| | | | | JP | 2007-211298 | A | |
| | | | | EP | 1997916 | A1 | |
| | | | | CN | 101384735 | A | |
| | | | | KR | 10-2008-0089628 | A | |
| JP | 2018-104805 | A | 05 July 2018 | (Family: none) | | | |
| JP | 2011-516720 | A | 26 May 2011 | US claims | 2011/0041653 | A1 | |
| | | | | WO | 2009/075464 | A1 | |
| | | | | KR | 10-2009-0062189 | A | |
| | | | | CN | 101896298 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S63188460 A
- JP H849011 A
- JP H01294817 A
- JP H05320733 A

- JP 2007211298 A
- JP H08246024 A
- JP H049420 A

**Non-patent literature cited in the description**

- Kaizaibutsu Seigyo to Koseijodo-ko Seizo Gijutsu. **NISHIYAMA KINEN GIJUTSU KOZA.** Controlling Inclusions and High-Cleanliness Steel Production Techniques. The Iron and Steel Institute of Japan, October 2004

- *Steelmaking,* August 2012, vol. 28 (4), 47-50